# EUROPÄISCHE PATENTSCHRIFT

(11) **EP 3 710 769 B1**
(45) Veröffentlichungstag und Bekanntmachung des Hinweises auf die Patenterteilung: **22.11.2023**
(21) Anmeldenummer: 20701456.4
(22) Anmeldetag: 21.01.2020
(51) Int. Cl.: F27D 3/12, F27B 9/26

(54) **VORRICHTUNG, SYSTEM UND VERFAHREN ZUM SEPARIEREN VON TRANSPORTBOOTEN**
DEVICE, SYSTEM AND METHOD FOR SEPARATING TRANSPORT BOATS
DISPOSITIF, SYSTÈME ET PROCÉDÉ PERMETTANT DE SÉPARER DES BACS DE TRANSPORT

(30) Priorität: 01.02.2019 DE 102019102591
(43) Veröffentlichungstag der Anmeldung: 23.09.2020
(73) Patentinhaber: ALD Vacuum Technologies GmbH, 63457 Hanau (DE)
(72) Erfinder: BEINENZ, Frank, 63457 Hanau (DE); HERDLER, Sven, 63776 Mömbris (DE); FACHINGER, Johannes, 63674 Altenstadt (DE)
(74) Vertreter: Fuchs Patentanwälte Partnerschaft mbB
(86) Internationale Anmeldenummer: PCT/EP2020/051380
(87) Internationale Veröffentlichungsnummer: WO 2020/156881

(56) Entgegenhaltungen:
- US-A- 3 038 712
- US-A1- 2010 044 892

## Beschreibung

Die vorliegende Erfindung betrifft eine Vorrichtung, ein System und ein Verfahren zum Separieren von miteinander verbundenen Transportbooten, die insbesondere durch Druck zusammengebacken sind bzw. aneinander haften. Transportboote im Sinne der vorliegenden Erfindung können im Englischen als *"sintering shoes"* bezeichnet werden und umfassen gemäß der vorliegenden Offenbarung auch Transportplatten oder Werkstückträger, die in verschiedenen technischen Anwendungen verwendet werden.

### Hintergrund der Erfindung

Transportboote, Transportplatten oder Werkstückträger kommen in einer Vielzahl von technischen Gebieten zum Transport von Ladung zum Einsatz.

So werden zu separierende Transportboote beispielsweise im Rahmen der Herstellung von nuklearen Brennstoffelementen zum Transport von MOX-Pellets (Mischoxid-Pellets) in Sinterofenanlagen verwendet. Die Transportboote werden hierbei mit zu MOX-Pellets gepresstem Brennstoffpulver beladen, um diese MOX-Pellets anschließend mittels der Transportboote in einen Sinterofen zu verlagern. In dem Sinterofen werden die MOX-Pellets dann bei Temperaturen von 200 °C bis 2000 °C und einem Druck zwischen 80 kPa und 120 kPa gesintert und anschließend mittels der Transportboote zum nachfolgenden Entladen der Transportboote weiter transportiert.

Bei diesem Ablauf ist in der Praxis eine Vielzahl von Transportbooten aneinandergereiht, wobei in Bewegungsrichtung betrachtet jeweils eine vordere Stirnfläche eines Transportboots in Kontakt mit einer hinteren Stirnfläche eines benachbarten Transportboots steht. Die Vielzahl an Transportbooten wird gemeinsam in eine vorgesehene Bewegungsrichtung bewegt. Da sich die Transportboote während des Sinterns der darauf befindlichen MOX-Pellets ebenfalls in dem Sinterofen befinden, werden benachbarte Transportboote durch das Sintern an den Kontaktflächen zwischen den benachbarten Transportbooten miteinander verbunden. Mit anderen Worten werden benachbarte Transportboote an den einander zugewandten Stirnflächen zusammengebacken.

Dieses feste Verbinden bzw. Zusammenbacken der Transportboote ist jedoch ein unerwünschter Effekt. Um die Transportboote nach dem Verlassen des Sinterofens besser handhaben zu können, müssen diese wieder voneinander getrennt werden.

Hierzu schlägt das Dokument US 2010/0044892 A1 eine Vorrichtung zum Separieren von Transportbooten vor, die eine Separationskomponente umfasst, welche in einer zu der Bewegungsrichtung der Transportboote orthogonalen Richtung auf die Transportboote einwirkt und diese dadurch trennt. Genauer gesagt lehrt das Dokument US 2010/0044892 A1 ein Exzenterelement, dass von unten in vertikaler Richtung eine Kraft nach oben auf den Kontaktbereich der miteinander verbundenen, in horizontaler Richtung bewegbaren Transportboote aufbringt. Hierdurch werden die Transportboote zumindest abschnittsweise angehoben. Ein solches Anheben kann jedoch zu Gefahren führen, da auf den Transportbooten angeordnete MOX-Pellets verrutschen und/oder von den Transportbooten herunterfallen können.

Um das Anheben zu begrenzen und die damit verbundenen Gefahren zumindest zu verringern, schlägt das Dokument US 2010/0044892 A1 vor, die Vorrichtung in einer Ausführungsform mit mehreren Niederhaltern zu versehen. Diese Niederhalter sind so angeordnet, dass sie jeweils ein einem angehobenen Ende entgegengesetztes Ende eines Transportboots niederhalten. Jedoch stellen diese Niederhalter zusätzliche in der Vorrichtung zu integrierende Komponenten dar, die die Komplexität des Aufbaus erhöht.

Es ist daher eine Aufgabe der vorliegenden Erfindung, die Nachteile aus dem Stand der Technik zu überwinden. Insbesondere besteht eine Aufgabe der Erfindung darin, eine Vorrichtung, ein System, ein zugehöriges Transportboot und ein Verfahren bereitzustellen, die ein sicheres Separieren der Transportboote ermöglichen, ohne die Komplexität des Gesamtaufbaus zu erhöhen.

Die Aufgaben werden durch eine Vorrichtung, ein System, ein Transportboot und ein Verfahren gemäß den unabhängigen Patentansprüchen gelöst. Weiterbildungen und Ausführungsformen der Vorrichtung, des Systems, des Transportboots und des Verfahrens sind Gegenstand der abhängigen Ansprüche und der nachstehenden Beschreibung.

### Beschreibung der Erfindung

Ein Aspekt der Erfindung betrifft eine Vorrichtung, die dafür vorgesehen ist, miteinander verbundene Transportboote zu separieren, die in einer ersten Ebene in eine vorgesehene Bewegungsrichtung bewegbar sind. Die Vorrichtung umfasst eine im Wesentlichen ovale, nicht kreisförmige Separationsscheibe, die parallel zu der ersten Ebene ausgerichtet ist und über eine Antriebswelle mit einem Drehantrieb und einer Hubeinrichtung verbunden ist. Parallel zu der ersten Ebene ausgerichtet bedeutet, dass die ovale (jedoch nicht kreisförmige) Separationsscheibe sich je nach Position und Stellung in der ersten Ebene oder einer von dieser beabstandeten parallelen zweiten Ebene erstrecken kann. Die Separationsscheibe ist mittels der Hubeinrichtung in Richtung der zu separierenden Transportboote bewegbar, um mit einer korrespondierenden Gesamtausnehmung in den zu separierenden Transportbooten in Eingriff zu gelangen bzw. um in die Gesamtausnehmung eingebracht zu werden. Genauer gesagt ist die Separationsscheibe mittels der Hubeinrichtung entlang einer zu den Transportbooten und zu deren Bewegungsrichtung im Wesentlichen orthogonalen Achse über die Antriebswelle in Richtung der zu separierenden Transportboote und von diesen weg, zurück in eine Ausgangsposition bewegbar. Die korrespondierende Gesamtausnehmung in den zu separierenden Transportbooten erstreckt sich über beide Transportboote hinweg, d.h. die Gesamtausnehmung umfasst einen Bereich in dem eine Stirn- bzw. Kontaktfläche der beiden Transportboote liegt. Somit besteht die Gesamtausnehmung aus zwei Teilausnehmungen, wobei jeweils eine Teilausnehmung in einem von zwei miteinander verbundenen Transportbooten ausgebildet ist. Des Weiteren ist die Separationsscheibe mittels des Drehantriebs um eine Drehachse bzw. um die Drehachse der Antriebswelle in der und/oder parallel zu der ersten Ebene drehbar, um die zu separierenden Transportboote durch das Drehen der Separationsscheibe voneinander zu separieren. Das Drehen der ovalen, nicht kreisförmigen Separationsscheibe bewirkt eine Kraftaufbringung innerhalb der ersten Ebene auf einander gegenüberliegende Grenzflächen der Gesamtausnehmung, d.h. jeweils auf eine Grenzfläche einer Teilausnehmung. Mit anderen Worten wird das von dem Drehantrieb erzeugte Drehmoment über die Separationsscheibe in Kräfte umgewandelt, die durch eine zumindest punktuelle oder flächige Kontaktierung der Separationsscheibe an den einander gegenüberliegende Grenzflächen der Gesamtausnehmung die Transportboote auseinander drückt und so deren Verbindung löst.

Da die die Verbindung der Transportboote trennende Kraft lediglich in der ersten Ebene wirkt, welche in der Regel in eine horizontale Ebene ist, werden die zu separierenden Transportboote bei der Separation nicht angehoben. Somit wird die Gefahr Ladung zu verlieren verringert. Gleichzeitig kann dank der erfindungsgemäßen Vorrichtung auf zusätzliche Niederhalter verzichtet werden, was die Komplexität des Gesamtaufbaus der Vorrichtung reduziert.

Die im Wesentlichen ovale Separationsscheibe beschreibt eine flache rundliche konvexe Figur, die im weitesten Sinne dem Profil eines Vogeleis ähnelt. Jedoch ist die Separationsscheibe der vorliegenden Erfindung nicht kreisförmig, was bedeutet, dass die Separationsscheibe wenigstens zwei verschiedene Breiten A und B aufweist, wobei Breite B größer als Breite A ist. Breite A ist geringer als die in Bewegungsrichtung betrachtete Ausnehmungslänge der Gesamtausnehmung, während Breite B größer als diese Ausnehmungslänge ist. Beide Breiten A und B der Separationsschreibe sind geringer als die Ausnehmungsbreite der Gesamtausnehmung quer zur Bewegungsrichtung betrachtet. Durch diese Ausgestaltung kann die Separationsscheibe durch eine vertikale Hubbewegung mittels der Hubeinrichtung in die Gesamtausnehmung eingebracht werden, wobei sich die Separationsscheibe in einer Stellung befindet, in der die Separationsscheibe während des Einbringens keine der Begrenzungsflächen der Gesamtausnehmung berührt. Die Breite B kann sich in dieser Stellung im Wesentlichen quer zu der Bewegungsrichtung der Transportboote erstrecken, während sich die Breite A im Wesentlichen in Bewegungsrichtung erstrecken kann. Durch ein anschließendes Drehen der Separationsscheibe mittels des Drehantriebs um die Drehachse der Antriebswelle kann die Breite B im Wesentlichen in Bewegungsrichtung gedreht werden, sodass die Separationsscheibe mit in Bewegungsrichtung betrachtet einander gegenüberliegenden Grenzflächen der Gesamtausnehmung in Berührung gelangt. Da die Breite B größer als die Ausnehmungslänge der Gesamtausnehmung ist, wird durch die Drehbewegung der Separationsscheibe eine Kraft in horizontaler Richtung auf die zu separierenden Transportboote aufgebracht. Genauer gesagt, werden einander entgegengesetzte Kräfte auf die einander gegenüberliegenden Grenzflächen der Gesamtausnehmung aufgebracht, die ein Separieren der miteinander verbundenen Transportboote bewirken.

Die im Wesentlichen ovale, nicht kreisförmige Separationsscheibe kann insbesondere eine EIlipsenform oder eine Spiralform haben. Alternativ kann die Separationsscheibe auch eine unsymmetrische ovale Form (beliebiges Oval) haben. Auch eine Kreisform mit einem Vorsprung ist denkbar und gilt als im Wesentlichen oval und nicht kreisförmig, da die Separationsscheibe durch den Vorsprung zwei unterschiedliche Breiten hat. Die genaue Gestalt der Separationsscheibe kann im Hinblick auf die Gesamtausnehmung in den zu separierenden Transportbooten gewählt werden und/oder andersrum.

Eine spiralförmige Separationsscheibe kann beispielsweise als archimedische, logarithmische oder fermatsche Spirale ausgebildet sein. Eine spiralförmige Separationsscheibe hat den Vorteil, dass der Radius in Abhängigkeit des Drehwinkels in definierter Weise kontinuierlich zunimmt. Unter Berücksichtigung dieses Wissens kann insbesondere bei einem Drehen der Separationsscheibe mittels eines Servomotors mit Inkrementalgeber eine gezielte und sehr präzise Separation der Transportbote ausgeführt werden.

In einer Ausführungsform der Vorrichtung kann die im Wesentlichen ovale, nicht kreisförmige Separationsscheibe kraftschlüssig an der Antriebswelle angebracht sein. Insbesondere kann die Separationsscheibe an einem oberen Endabschnitt der Antriebswelle angebracht sein. Alternativ oder zusätzlich kann eine formschlüssige und/oder stoffschlüssige Anbringung der Separationsscheibe an der Antriebswelle vorgesehen sein.

In einer Weiterbildung kann die erfindungsgemäße Vorrichtung eine Trennwand umfassen, die dafür vorgesehen ist, einen mit Vakuum beaufschlagten Bereich von einem mit Umgebungsdruck beaufschlagten Bereich zu trennen. Die Antriebswelle ist in dieser Weiterbildung durch eine in der Trennwand ausgebildete Durchführung abgedichtet geführt ist. Die Durchführung ist somit eine Dreh-Hubdurchführung. Die Trennwand stellt somit eine Schnittstelle zwischen dem mit Umgebungsdruck beaufschlagten Bereich und dem mit Vakuum beaufschlagten Bereich dar, in welchem die Transportboote angeordnet sind. Die Trennwand ermöglicht es einen Teil der Vorrichtung in dem mit Umgebungsdruck beaufschlagten Bereich anzuordnen. So können insbesondere der Drehantrieb und die Hubeinrichtung in dem mit Umgebungsdruck beaufschlagten Bereich vorgesehen sein. Dies erleichtert die Wartungsarbeiten, da kein Eingriff in den mit Vakuum beaufschlagten Bereich erforderlich ist.

In einer Ausführungsform kann der Drehabtrieb der Vorrichtung seitlich zu der Antriebswelle angeordnet und dazu ausgebildet sein, diese um deren Drehachse zu drehen. Dies ermöglicht einen platzsparenden Gesamtaufbau der Vorrichtung. Die Hubeinrichtung kann unterhalb der Antriebswelle an deren unterem Endabschnitt angeordnet sein. Der untere Endabschnitt der Antriebswelle ist dem oberen Endabschnitt der Antriebswelle entgegengesetzt.

Die Erfindung betrifft ferner ein System zum Separieren von miteinander verbundenen Transportbooten. Das System umfasst wenigstens zwei Transportboote, die in einer ersten Ebene in eine vorgesehene Bewegungsrichtung bewegbar sind. Die wenigstens zwei Transportboote sind über einander zugewandte Stirnflächen der Transportboote miteinander verbunden. Eine feste Verbdingung der wenigstens zwei Transportboote kann beispielsweise zuvor durch Druck und Temperatur während eines Sinterprozesses erzeugt worden sein, d.h. die wenigstens zwei Transportboote können an den einander zugewandte Stirnflächen zusammengebacken sein. An jedem der wenigstens zwei Transportboote ist im Bereich der einander zugewandten Stirnflächen eine Teilausnehmung derart ausgebildet, dass in dem miteinander verbundenen Zustand der wenigstens zwei Transportboote die Teilausnehmungen zueinander ausgerichtet sind und gemeinsam eine Gesamtausnehmung bilden. Das System umfasst ferner eine Vorrichtung der vorstehend beschriebenen Art, mit der im Wesentlichen ovalen, nicht kreisförmigen Separationsscheibe, die sich parallel zu der ersten Ebene erstreckt und über die Antriebswelle mit dem Drehantrieb und der Hubeinrichtung verbunden ist. Die Separationsscheibe ist mittels der Hubeinrichtung in Richtung der wenigstens zwei Transportboote bewegbar ist, um mit der Gesamtausnehmung in den wenigstens zwei Transportbooten in Eingriff zu gelangen. Ferner ist die Separationsscheibe mittels des Drehantriebs in der ersten Ebene drehbar, um die wenigstens zwei Transportboote durch das Drehen der Separationsscheibe voneinander zu separieren.

Die Gesamtausnehmung kann beispielsweise eine rechteckige Gestalt haben, wobei jede der beiden die Gesamtausnehmung bildenden Teilausnehmungen ebenfalls für sich eine rechteckige Gestalt haben kann. Die Gesamtausnehmung bzw. die beiden Teilausnehmungen können sich vorzugsweise über die gesamte Dicke der Transportboote erstrecken. Alternativ kann die Gesamtausnehmung bzw. können die beiden Teilausnehmungen eine geringere Dicke als die Transportboote haben. In diesem Fall ist die Gesamtausnehmung nur von unten zugänglich und in einer Draufsicht von oben auf die Transportboote nicht sichtbar. Die Gesamtausnehmung hat in Bewegungsrichtung betrachtet eine Ausnehmungslänge, die sich zusammen aus den Längen der beiden Teilausnehmungen ergibt. Ferner hat Gesamtausnehmung eine Ausnehmungsbreite quer zur Bewegungsrichtung betrachtet, die jeweils der Breite der beiden Teilausnehmungen entsprechen kann.

Die Separationsscheibe hat zumindest eine erste Breite A, die geringer als die Ausnehmungslänge ist, und zumindest eine zweite Breite B, die größer als die Ausnehmungslänge ist. Beide Breiten A und B sind geringer als die Ausnehmungsbreite. Durch die vertikale Hubbewegung mittels der Hubeinrichtung ist die Separationsscheibe in die Gesamtausnehmung einbringbar, wobei sich die Separationsscheibe in einer Stellung befindet, in der die Separationsscheibe während des Einbringens keine der Begrenzungsflächen der Gesamtausnehmung berührt. Die Breite B kann sich in dieser Stellung im Wesentlichen quer zu der Bewegungsrichtung der Transportboote erstrecken, während sich die Breite A im Wesentlichen in Bewegungsrichtung erstrecken kann. Durch ein anschließendes Drehen der Separationsscheibe mittels des Drehantriebs um die Drehachse der Antriebswelle kann die Breite B im Wesentlichen in Bewegungsrichtung gedreht werden, sodass die Separationsscheibe mit in Bewegungsrichtung betrachtet einander gegenüberliegenden Grenzflächen der Gesamtausnehmung in Berührung gelangt. Da die Breite B größer als die Ausnehmungslänge der Gesamtausnehmung ist, wird durch die Drehbewegung der Separationsscheibe eine Kraft in horizontaler Richtung auf die zu separierenden Transportboote aufgebracht. Genauer gesagt, werden einander entgegengesetzte Kräfte auf die einander gegenüberliegenden Grenzflächen der Gesamtausnehmung aufgebracht, die ein Separieren der miteinander verbundenen Transportboote bewirken. Je nach konkreter Ausgestaltung der Separationsscheibe kann beispielsweise das in Bewegungsrichtung betrachtete vorausfahrende Transportboot durch die Separationsscheibe in Bewegungsrichtung gedrückt werden, während das nachfolgende Transportboot zurückgehalten wird, d.h. in seiner Position verbleibt.

Es versteht sich, dass mehr als zwei miteinander verbundene Transportboote in dem System vorgesehen sein können. Jedes der Transportboote kann zwei Teilausnehmungen aufweisen, die jeweils im Bereich von einander entgegengesetzten Stirnflächen des jeweiligen Transportbootes ausgebildet sein können. So kann jedes der Transportboote jeweils eine Gesamtausnehmung zusammen mit einem in Bewegungsrichtung betrachtet hinter dem Transportboot befindlichen Transportboot bilden und jeweils eine weitere Gesamtausnehmung zusammen mit einem in Bewegungsrichtung betrachtet vor dem Transportboot befindlichen Transportboot bilden.

In einer Weiterbildung des Systems kann die Vorrichtung eine Trennwand umfassen, die einen mit Vakuum beaufschlagten Bereich von einem mit Umgebungsdruck beaufschlagten Bereich trennt. Die Antriebswelle ist durch eine in der Trennwand ausgebildete Dreh-Hubdurchführung abgedichtet geführt. Die wenigstens zwei Transportboote und die Separationsscheibe sind in dieser Weiterbildung in dem mit Vakuum beaufschlagten Bereich angeordnet, während der Drehantrieb und die Hubeinrichtung in dem mit Umgebungsdruck beaufschlagten Bereich angeordnet sind.

Ein weiterer Aspekt der Erfindung betrifft ein Transportboot für ein System der vorstehend beschriebenen Art. Das Transportboot ist in einer ersten Ebene in eine vorgesehene Bewegungsrichtung bewegbar. An einander entgegengesetzten Enden umfasst das Transportboot jeweils eine Stirnfläche, die dafür vorgesehen ist, eine gegenüberliegende Stirnfläche eines benachbarten Transportboots zu kontaktieren. In dem Bereich der Stirnfläche des Transportboots ist eine Teilausnehmung ausgebildet ist, die dazu eingerichtet ist, einen Abschnitt einer Separationsscheibe aufzunehmen. Hierfür kann die Teilausnehmung nach außen offene ausgebildet sein. Das heißt, dass sich die Teilausnehmung ausgehend von der Stirnfläche in Richtung der Mitte des Transportboots erstrecken kann.

Die Teilausnehmung kann beispielsweise eine rechteckige Gestalt haben. Die Teilausnehmung kann sich in einer Ausführungsform über die gesamte Dicke des Transportboots erstrecken. Alternativ dazu kann die Teilausnehmung sich lediglich über einen Teil der Dicke des Transportboots erstrecken, beispielsweise über zwei Drittel, über die Hälfte oder über ein Drittel der Dicke des Transportboots. In diesem Fall ist die Gesamtausnehmung nur von unten zugänglich und in einer Draufsicht von oben auf die Transportboote nicht sichtbar. Die Gestalt und Dimensionen der Teilausnehmung kann nach Maßgabe der Gestalt und Dimensionen einer zugehörigen Teilausnehmung eines im Betrieb benachbarten Transportboots und/oder nach Maßgabe der Gestalt und Dimensionen einer korrespondierenden Separationsscheibe gewählt werden.

Das Transportboot kann eine weitere Teilausnehmungen aufweisen, die im Bereich einer entgegengesetzten Stirnfläche des Transportbootes ausgebildet ist. Somit können in dem Transportboot zwei Teilausnehmungen ausgebildet sein. So kann das Transportboote jeweils eine Gesamtausnehmung zusammen mit einem in Bewegungsrichtung betrachtet hinter dem Transportboot befindlichen Transportboot bilden und jeweils eine weitere Gesamtausnehmung zusammen mit einem in Bewegungsrichtung betrachtet vor dem Transportboot befindlichen Transportboot bilden.

Die Erfindung betrifft ferner ein Verfahren zum Separieren von miteinander verbundenen Transportbooten, die in einer ersten Ebene in eine vorgesehene Bewegungsrichtung bewegbar sind. Insbesondere kann das Verfahren mittels einer Vorrichtung der vorstehend beschriebenen Art durchgeführt werden. Das Verfahren umfasst die Schritte:
Bewegen einer im Wesentlichen ovalen, nicht kreisförmigen Separationsscheibe mittels einer Hubeinrichtung in Richtung der zu separierenden Transportboote, wobei die Separationsscheibe parallel zu der ersten Ebene ausgerichtet ist;
Einbringen der Separationsscheibe in eine korrespondierenden Gesamtausnehmung in den zu separierenden Transportbooten, insbesondere durch das vorstehend beschriebene Bewegen; und
Drehen der in die Gesamtausnehmung eingreifenden Separationsscheibe mittels eines Drehantriebs in der und/oder parallel zu der ersten Ebene, um die zu separierenden Transportboote durch das Drehen der Separationsscheibe voneinander zu separieren.

Das Verfahren kann vor dem Bewegen der Separationsscheibe in Richtung der zu separierenden Transportboote ferner den Schritt umfassen: Positionieren der zu separierenden Transportboote derart, dass die Gesamtausnehmung in den Transportbooten in einer Linie mit der Separationsscheibe ausgerichtet ist.

Die Linie kann vorzugsweise orthogonal zu der vorgesehenen Bewegungsrichtung der Transportboote sein, sodass die Separationsscheibe durch die Hubbewegung problemlos in die Ausnehmung einbringbar ist.

Das Verfahren kann des Weiteren Schritte des Zurückdrehens und Zurückbewegens der Separationsscheibe in eine Ausgangsposition umfassen, die nach dem Separieren der zu separierenden Transportboote ausgeführt werden.

Anschließend können die Schritte des Verfahrens wiederholt werden, um weitere voneinander zu separierende Transportboote zu separieren.

Obgleich einige Aspekte und Merkmale vorstehend und nachstehend lediglich in Bezug auf die Vorrichtung zum Separieren von miteinander verbundenen Transportbooten beschrieben sind, können diese Aspekte und Merkmale entsprechend für das System, das Transportboot und/oder das Verfahren zum Separieren von miteinander verbundenen Transportbooten gelten und umgekehrt.

### Kurzbeschreibung der Figuren

Ausführungsbeispiele der vorliegenden Erfindung werden nachstehend in Bezug auf die beiliegenden schematischen Figuren näher erläutert. Es stellen dar:
- Fig. 1: eine seitliche Schnittansicht eines Systems zum Separieren von miteinander verbundenen Transportbooten gemäß einem Ausführungsbeispiel.
- Fig. 2: eine Draufsicht auf eine Schnittansicht des Systems gemäß dem Ausführungsbeispiel aus Fig. 1.

### Figurenbeschreibung

Gleiche Bezugszeichen in den Figuren deuten auf gleiche oder analoge Elemente hin.

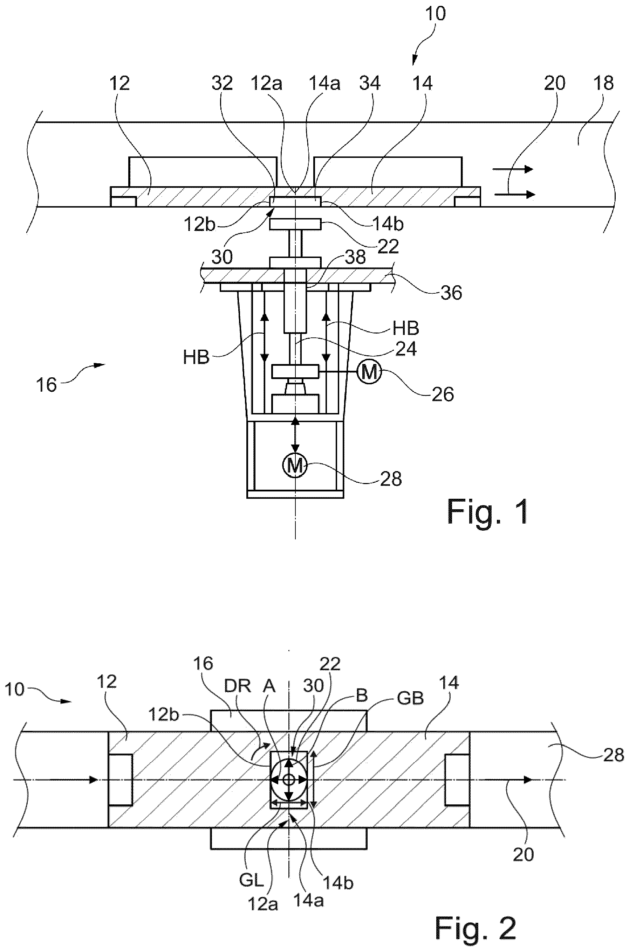

Die Figuren 1 und 2 zeigen eine beispielhafte Ausführungsform des erfindungsgemäßen Systems 10. Figur 1 zeigt eine seitliche Schnittansicht des Ausführungsbeispiels, während Figur 2 eine Draufsicht auf eine Schnittansicht zeigt. Das System 10 umfasst zwei miteinander verbundene Transportboote 12, 14 und eine Vorrichtung 16 zum Trennen von zu separierenden Transportbooten (hier zum Separieren der Transportboote 12, 14).

Die flächigen Transportboote 12, 14 sind in der gezeigten Darstellung in einem Tunnel 18 angeordnet und in einer Bewegungsrichtung 20 innerhalb dieses Tunnels 18 verlagerbar. Die Transportboote 12, 14 sind jeweils mit bereits gesinterten MOX-Pellets beladen. Durch den Sinterprozess sind die Transportboote 12, 14 an einander zugewandten Stirnflächen 12a, 14a zusammengebacken. Die dadurch entstandene feste Verbindung der Transportboote 12, 14 ist jedoch unerwünscht und soll mithilfe der Vorrichtung 16 gelöst werden.

Die erfindungsgemäße Vorrichtung 16 umfasst eine im Wesentlichen ovale, nicht kreisförmige Separationsscheibe 22, deren Erstreckung parallel zu den Transportbooten 12, 14 ist. Die Separationsscheibe 22 ist über eine Antriebswelle 24 mit einem Drehantrieb 26 und einer Hubeinrichtung 28 der Vorrichtung 16 verbunden. Während der Drehantrieb 26 seitlich der Antriebswelle 24 angeordnet ist, befindet sich die Hubeinrichtung 28 am unteren Ende und in einer Linie mit der Antriebswelle 24.

Die Vorrichtung 16 ist unterhalt des Tunnels 18, also unterhalb der Transportboote 12, 14 angeordnet. In dem in Figur 1 gezeigten Zustand sind die beiden zu separierenden Transportboote 12, 14 so positioniert, dass eine von den beiden Transportbooten 12, 14 gebildete Gesamtausnehmung 30 entlang der Achse der Antriebswelle 24 betrachtet genau oberhalb der Separationsscheibe 22 angeordnet ist.

Die Gesamtausnehmung 30 hat in der gezeigten Ausführungsform eine rechteckige Gestalt (siehe Figur 2) und setzt sich aus zwei Teilausnehmungen 32, 34 zusammen, wobei jeweils eine Teilausnehmung 32, 34 in einem der beiden miteinander verbundenen Transportboote 12, 14 ausgebildet ist. Jede der Teilausnehmungen 32, 34 erstreckt sich ausgehend von einer Stirnfläche 12a, 14a des zugehörigen Transportboots 12 bzw. 14 in Richtung der Mitte dieses Transportboots 12, 14. Die von den beiden Teilausnehmungen 32, 34 gebildete Gesamtausnehmung 30 hat in Bewegungsrichtung 20 betrachtet eine Ausnehmungslänge GL und quer zur Bewegungsrichtung 20 eine Ausnehmungsbreite GB, wobei sich die Ausnehmungslänge GL aus den Längen der beiden Teilausnehmungen 32, 34 zusammensetzt und die Ausnehmungsbreite GB der jeweiligen Breite der Teilausnehmungen 32, 34 entspricht. Die Gesamtausnehmung 30 hat in der gezeigten Ausführungsform eine geringere Dicke als die Transportboote 12, 14, d.h. die Gesamtausnehmung 30 ist nur von unten zugänglich und in einer nicht geschnittenen Draufsicht von oben auf die Transportboote 12, 14 nicht sichtbar (hier nicht gezeigt).

Die Separationsscheibe 22 ist mittels der Hubeinrichtung 28 in Richtung der zu separierenden Transportboote 12, 14 bewegbar (Pfeile HR), um mit der korrespondierenden Gesamtausnehmung 30 in Eingriff zu gelangen bzw. um durch die Hubbewegung in diese Gesamtausnehmung 30 eingebracht zu werden. Ferner ist die Separationsscheibe 22 mittels des Drehantriebs 26 um die Achse der Antriebswelle 24 drehbar.

In dem gezeigten Beispiel hat die Separationsscheibe 22 eine symmetrische ovale Gestalt, die u.a. zwei verschiedene Breiten A und B aufweist. Die Breite B ist größer als die Breite A. Die Breite Ader Separationsscheibe 22 ist geringer als die in Bewegungsrichtung 20 betrachtete Ausnehmungslänge GL der Gesamtausnehmung 30. Die Breite B der Separationsscheibe 22 ist größer als diese Ausnehmungslänge GL. Beide Breiten A und B der Separationsschreibe 22 sind geringer als die Ausnehmungsbreite GB der Gesamtausnehmung 30. Diese Verhältnisse und Dimensionen sind insbesondere aus Figur 2 zu erkennen.

Während der vertikalen Hubbewegung der Separationsscheibe 22 zum Einbringen der Separationsscheibe 22 in die Gesamtausnehmung 30 befindet sich die Separationsscheibe 22 in einer Stellung, in der sie beim Einbringen keine der Begrenzungsflächen der Gesamtausnehmung 30 berührt (weder in Längsrichtung noch in Querrichtung zur Bewegungsrichtung 20 betrachtet). Durch ein an das Einbringen anschließendes Drehen der Separationsscheibe 22 mittels des Drehantriebs 26 um die Drehachse der Antriebswelle 24 kann die Separationsscheibe 22 in Bewegungsrichtung 20 gedreht werden, derart dass die Breite B der Separationsscheibe 22 im Wesentlichen in Bewegungsrichtung 20 angeordnet wird. Dieses Drehen ist in Figur 2 durch den Pfeil DR angedeutet. Hierdurch gelangt die Separationsscheibe 22 zumindest punktuell oder flächig mit in Bewegungsrichtung 20 betrachtet einander gegenüberliegenden Grenzflächen 12b, 14b der Gesamtausnehmung 30 in Berührung, d.h. mit einer zum Transportboot 12 gehörenden Grenzfläche 12b und einer zum Transportboot 14 gehörenden Grenzfläche 14b. Da die Breite B der Separationsscheibe 22 größer als die Ausnehmungslänge GL der Gesamtausnehmung 30 ist, werden durch das beschriebene Drehen der Separationsscheibe 22 entgegengesetzte Kräfte in horizontaler Richtung über die Grenzflächen 12b, 14b auf die zu separierenden Transportboote 12, 14 aufgebracht. Genauer gesagt wirken diese einander entgegengesetzte Kräfte in bzw. entgegen der Bewegungsrichtung 20 auf die einander gegenüberliegenden Grenzflächen 12b, 14b der Gesamtausnehmung 30 ein und bewirken so ein vorgesehenes Separieren der miteinander verbundenen Transportboote 12, 14.

Die Vorrichtung 16 umfasst eine Trennwand 36, die dafür vorgesehen ist, einen mit Vakuum beaufschlagten Bereich von einem mit Umgebungsdruck beaufschlagten Bereich zu trennen. Wie in Figur 1 zu erkennen ist, sind in dem mit Vakuum beaufschlagten Bereich der Tunnel 18, die darin befindlichen Transportboote 12, 14 und die Separationsscheibe 22 angeordnet. In dem mit Umgebungsluft beaufschlagten Bereich sind der Drehantrieb 26 und die Hubeinrichtung 28 angeordnet. Um diese Anordnung der Komponenten der Vorrichtung 16 in unterschiedlichen Bereichen zu realisieren, ist in der Trennwand 36 eine Durchführung 38 ausgebildet, durch die die Antriebswelle 24 der Vorrichtung 16 abgedichtet hindurch geführt ist. Die Durchführung 38 ist somit eine Dreh-Hubdurchführung, die sowohl eine Drehbewegung als auch eine Hubbewegung der Antriebswelle 24 zulässt und dennoch den mit Vakuum beaufschlagten Bereich druckdicht gegenüber dem mit Umgebungsdruck beaufschlagten Bereich abgrenzt.

### Bezugszeichenliste

- 10: System
- 12: Transportboot
- 12a: Stirnfläche des Transportboots 12
- 12b: Grenzfläche der Teilausnehmung 32
- 14: Transportboot
- 14a: Stirnfläche des Transportboots 14
- 14b: Grenzfläche der Teilausnehmung 34
- 16: Vorrichtung
- 18: Tunnel
- 20: Bewegungsrichtung
- 22: Separationsscheibe
- A: geringere Breite der Separationsscheibe 22
- B: größere Breite der Separationsscheibe 22
- 24: Antriebswelle
- 26: Drehantrieb
- 28: Hubeinrichtung
- 30: Gesamtausnehmung
- 32: Teilausnehmung des Transportboots 12
- 34: Teilausnehmung des Transportboots 14
- 36: Trennwand
- 38: Dreh-Hubdurchführung
- GL: Ausnehmungslänge der Gesamtausnehmung 30
- GB: Ausnehmungsbreite der Gesamtausnehmung 30
- HR: Hubbewegungsrichtung
- DR: Drehbewegungsrichtung

## Patentansprüche

1. Vorrichtung (16) zum Separieren von miteinander verbundenen Transportbooten (12, 14), die in einer ersten Ebene in eine vorgesehene Bewegungsrichtung (20) bewegbar sind, **dadurch gekennzeichnet, dass** die Vorrichtung (16) eine im Wesentlichen ovale, nicht kreisförmige Separationsscheibe (22) umfasst, die parallel zu der ersten Ebene ausgerichtet ist und über eine Antriebswelle (24) mit einem Drehantrieb (26) und einer Hubeinrichtung (28) verbunden ist,
wobei die Separationsscheibe (22) mittels der Hubeinrichtung (28) in Richtung der zu separierenden Transportboote (12, 14) bewegbar ist, um mit einer korrespondierenden Gesamtausnehmung (30) in den zu separierenden Transportbooten (12, 14) in Eingriff zu gelangen, und
wobei die Separationsscheibe (22) mittels des Drehantriebs (26) in der und/oder parallel zu der ersten Ebene drehbar ist, um die zu separierenden Transportboote (12, 14) durch das Drehen der Separationsscheibe (22) voneinander zu separieren.

2. Vorrichtung (16) nach Anspruch 1, wobei die im Wesentlichen ovale, nicht kreisförmige Separationsscheibe (22) eine Ellipsenform oder eine Spiralform hat.

3. Vorrichtung (16) nach Anspruch 1 oder 2, wobei die im Wesentlichen ovale, nicht kreisförmige Separationsscheibe (22) kraftschlüssig an der Antriebswelle (24) angebracht ist.

4. Vorrichtung (16) nach einem der vorangehenden Ansprüche, die ferner eine Trennwand (36) umfasst, die dafür vorgesehen ist, einen mit Vakuum beaufschlagten Bereich von einem mit Umgebungsdruck beaufschlagten Bereich zu trennen, wobei die Antriebswelle (24) durch eine in der Trennwand (36) ausgebildete Durchführung (38) abgedichtet geführt ist.

5. Vorrichtung (16) nach einem der vorangehenden Ansprüche, wobei der Drehabtrieb (26) seitlich zu der Antriebswelle (24) angeordnet ist.

6. System (10) zum Separieren von miteinander verbundenen Transportbooten (12, 14), wobei das System (10) umfasst:
wenigstens zwei Transportboote (12, 14), die in einer ersten Ebene in eine vorgesehene Bewegungsrichtung (20) bewegbar sind und die über einander zugewandte Stirnflächen (12a, 14a) der Transportboote (12, 14) miteinander verbunden sind, wobei an jedem der wenigstens zwei Transportboote (12, 14) im Bereich der einander zugewandten Stirnflächen (12a, 14a)eine Teilausnehmung (32, 34) derart ausgebildet ist, dass in dem miteinander verbundenen Zustand der wenigstens zwei Transportboote (12, 14) die Teilausnehmungen (32, 34) zueinander ausgerichtet sind und gemeinsam eine Gesamtausnehmung (30) bilden;
eine Vorrichtung (16) nach einem der vorangehenden Ansprüche, mit der im Wesentlichen ovalen, nicht kreisförmigen Separationsscheibe (22), die sich parallel zu der ersten Ebene erstreckt und über die Antriebswelle (24) mit dem Drehantrieb (26) und der Hubeinrichtung (28) verbunden ist,
wobei die Separationsscheibe (22) mittels der Hubeinrichtung (28) in Richtung der wenigstens zwei Transportboote (12, 14) bewegbar ist, um mit der Gesamtausnehmung (30) in den wenigstens zwei Transportbooten (12, 14) in Eingriff zu gelangen, und
wobei die Separationsscheibe (22) mittels des Drehantriebs (26) in der ersten Ebene drehbar ist, um die wenigstens zwei Transportboote (12, 14) durch das Drehen der Separationsscheibe (22) voneinander zu separieren.

7. System (10) nach Anspruch 6, wobei die Vorrichtung (16) eine Trennwand (36) umfasst, die einen mit Vakuum beaufschlagten Bereich von einem mit Umgebungsdruck beaufschlagten Bereich trennt, wobei die Antriebswelle (24) durch eine in der Trennwand (36) ausgebildete Durchführung (38) abgedichtet geführt ist, und wobei die wenigstens zwei Transportboote (12, 14) und die Separationsscheibe (22) in dem mit Vakuum beaufschlagten Bereich angeordnet sind, während der Drehantrieb (26) und die Hubeinrichtung (28) in dem mit Umgebungsdruck beaufschlagten Bereich angeordnet sind.

8. Transportboot (12) für ein System (10) nach Anspruch 6 oder 7, das in einer ersten Ebene in eine vorgesehene Bewegungsrichtung (20) bewegbar ist,
wobei das Transportboot (12) an einander entgegengesetzten Enden jeweils eine Stirnfläche (12a) umfasst, die dafür vorgesehen ist, eine gegenüberliegende Stirnfläche (14a) eines benachbarten Transportboots (14) zu kontaktieren,
**dadurch gekennzeichnet, dass** in dem Bereich der Stirnfläche (12a) des Transportboots (12) eine Teilausnehmung (32) ausgebildet ist, die dazu eingerichtet ist, einen Abschnitt einer Separationsscheibe (22) aufzunehmen.

9. Verfahren zum Separieren von miteinander verbundenen Transportbooten (12, 14), die in einer ersten Ebene in eine vorgesehene Bewegungsrichtung (20) bewegbar sind, **gekennzeichnet durch** die Schritte:
Bewegen einer im Wesentlichen ovalen, nicht kreisförmigen Separationsscheibe 822) mittels einer Hubeinrichtung (28) in Richtung der zu separierenden Transportboote (12, 14), wobei die Separationsscheibe (22) parallel zu der ersten Ebene ausgerichtet ist,
Einbringen der Separationsscheibe (22) in eine korrespondierenden Gesamtausnehmung (30) in den zu separierenden Transportbooten (12, 14), und
Drehen der Separationsscheibe (22) mittels eines Drehantriebs (26) in der und/oder parallel zu der ersten Ebene, um die zu separierenden Transportboote (12, 14) durch das Drehen der Separationsscheibe (22) voneinander zu separieren.

10. Verfahren nach Anspruch 9, das ferner den Schritt umfasst:
Positionieren der zu separierenden Transportboote (12, 14) derart, dass die Gesamtausnehmung (30) in den Transportbooten (12, 14) in einer Linie mit der Separationsscheibe (22) ausgerichtet ist, wobei die Linie vorzugsweise orthogonal zu der vorgesehenen Bewegungsrichtung (20) der Transportboote (12, 14) ist.

## Claims

1. A device (16) for separating interconnected transport boats (12, 14) movable in a first plane in an intended direction of motion (20), **characterized in that** the device (16) comprises a substantially oval non-circular separation disk (22) aligned parallel to the first plane and connected to a rotary drive (26) and a lifting device (28) via a drive shaft (24),
wherein the separation disk (22) is movable by means of the lifting device (28) in the direction of the transport boats (12, 14) to be separated in order to engage with a corresponding total recess (30) in the transport boats (12, 14) to be separated, and
wherein the separation disk (22) is rotatably movable in and/or parallel to the first plane by means of the rotary drive (26) to separate the transport boats (12, 14) to be separated from each other by rotating the separation disk (22).

2. The device (16) according to claim 1, wherein the substantially oval non-circular separation disk (22) has an elliptical shape or a spiral shape.

3. The device (16) according to claim 1 or 2, wherein the substantially oval, non-circular separation disk (22) is force-fitted to the drive shaft (24).

4. The device (16) according to any one of the preceding claims, further comprising a partition wall (36) intended to separate a region subjected to vacuum from a region subjected to ambient pressure, wherein the drive shaft (24) is guided in a sealed manner through a bushing (38) formed in the partition wall (36).

5. The device (16) according to any one of the preceding claims, wherein the rotary drive (26) is arranged laterally to the drive shaft (24).

6. A system (10) for separating interconnected transport boats (12, 14), the system (10) comprising:
at least two transport boats (12, 14), which are movable in a first plane in an intended direction of motion (20) and which are interconnected via end faces (12a, 14a) of the transport boats (12, 14) facing one another, wherein on each of the at least two transport boats (12, 14) in the region of the end faces (12a, 14a) facing one another, a partial recess (32, 34) is formed in such a way that, in the interconnected state of the at least two transport boats (12, 14), the partial recesses (32, 34) are aligned with one another and together form a total recess (30);
a device (16) according to any one of the preceding claims, comprising the substantially oval, non-circular separation disk (22) extending parallel to the first plane and connected to the rotary drive (26) and the lifting device (28) via the drive shaft (24),
wherein the separation disk (22) is movable by means of the lifting device (28) in the direction of the at least two transport boats (12, 14) to engage the total recess (30) in the at least two transport boats (12, 14), and
wherein the separation disk (22) is rotatably movable in the first plane by means of the rotary drive (26) to separate the at least two transport boats (12, 14) from each other by rotating the separation disk (22).

7. The system (10) of claim 6, wherein the device (16) comprises a partition wall (36) separating a region subjected to vacuum from a region subjected to ambient pressure, wherein the drive shaft (24) is guided in a sealed manner through a bushing (38) formed in the partition wall (36) and wherein the at least two transport boats (12, 14) and the separation disk (22) are arranged in the region subjected to vacuum, while the rotary drive (26) and the lifting device (28) are arranged in the region subjected to ambient pressure.

8. A transport boat (12) for a system (10) according to claim 6 or 7, which is movable in a first plane in an intended direction of motion (20),
wherein the transport boat (12) comprises at opposite ends each an end face (12a) intended for contacting an opposite end face (14a) of an adjacent transport boat (14),
**characterized in that** a partial recess (32) adapted to receive a portion of a separation disk (22) is formed in the region of the end face (12a) of the transport boats (12).

9. Method for separating interconnected transport boats (12, 14) movable in a first plane in an intended direction of motion (20), **characterized by** the steps of:
moving a substantially oval, non-circular separation disk (22) by means of a lifting device (28) in the direction of the transport boats (12, 14) to be separated, the separation disk (22) being aligned parallel to the first plane,
inserting the separation disk (22) into a corresponding total recess (30) in the transport boats (12, 14) to be separated, and
rotating the separation disk (22) by means of a rotary drive (26) in and/or parallel to the first plane to separate the transport boats (12, 14) to be separated from each other by rotating the separation disk (22).

10. The method according to claim 9, further comprising the step of:
positioning the transport boats (12, 14) to be separated such that the total recess (30) in the transport boats (12, 14) is aligned in a line with the separation disk (22), the line preferably being orthogonal to the intended direction of motion (20) of the transport boats (12, 14).

## Revendications

1. Dispositif (16) de séparation de bacs de transport (12, 14) reliés l'un à l'autre qui sont mobiles dans un premier plan dans un sens de déplacement (20) prévu, **caractérisé en ce que** le dispositif (16) présente un disque de séparation (22) sensiblement ovale, non circulaire qui est orienté parallèlement au premier plan et est relié par le biais d'un arbre d'entraînement (24) à une commande de rotation (26) et à un dispositif de levage (28),
selon lequel le disque de séparation (22) est mobile au moyen du dispositif de levage (28) en direction des bacs de séparation (12, 14) à séparer afin de parvenir en prise avec un évidement entier (30) correspondant dans les bacs de transport (12, 14) à séparer, et
selon lequel le disque de séparation (22) est rotatif au moyen de la commande de rotation (26) dans le et/ou parallèlement au premier plan afin de séparer l'un de l'autre les bacs de transport (12, 14) à séparer par la rotation du disque de séparation (22).

2. Dispositif (16) selon la revendication 1, selon lequel le disque de séparation (22) sensiblement ovale, non circulaire présente une forme d'ellipse ou une forme de spirale.

3. Dispositif (16) selon la revendication 1 ou 2, selon lequel le disque de séparation (22) sensiblement ovale, non circulaire est monté à force au niveau de l'arbre d'entraînement (24).

4. Dispositif (16) selon l'une quelconque des revendications précédentes, qui comprend de plus une paroi de séparation (36) qui est prévue afin de séparer une zone alimentée en vide d'une zone alimentée en pression ambiante, selon lequel l'arbre d'entraînement (24) est guidé de manière étanche à travers un passage (38) réalisé dans la paroi de séparation (36).

5. Dispositif (16) selon l'une quelconque des revendications précédentes, selon lequel la sortie rotative (26) est agencée latéralement par rapport à l'arbre d'entraînement (24).

6. Système (10) de séparation de bacs de transport (12, 14) reliés l'un à l'autre, selon lequel le système (10) comprend :
au moins deux bacs de transport (12, 14) qui sont mobiles dans un premier plan dans un sens de déplacement (20) prévu et qui sont reliés l'un à l'autre par le biais de surfaces avant (12a, 14a) tournées l'une vers l'autre des bacs de transport (12, 14), selon lequel un évidement partiel (32, 34) est réalisé au niveau de chacun des au moins deux bacs de transport (12, 14) dans la zone des surfaces avant (12a, 14a) tournées l'une vers l'autre de telle manière que, dans l'état relié entre eux des au moins deux bacs de transport (12, 14), les évidements partiels (32, 34) soient orientés l'un par rapport à l'autre et forment ensemble un évidement entier (30) ;
un dispositif (16) selon l'une quelconque des revendications précédentes, avec le disque de séparation (22) sensiblement ovale, non circulaire qui s'étend parallèlement au premier plan et est relié par le biais de l'arbre d'entraînement (24) à la commande de rotation (26) et au dispositif de levage (28),
selon lequel le disque de séparation (22) est mobile au moyen du dispositif de levage (28) en direction des au moins deux bacs de séparation (12, 14) afin de parvenir en prise avec l'évidement entier (30) dans les au moins deux bacs de transport (12, 14), et
selon lequel le disque de séparation (22) est rotatif au moyen de la commande de rotation (26) dans le premier plan afin de séparer l'un de l'autre les au moins deux bacs de transport (12, 14) par la rotation du disque de séparation (22).

7. Système (10) selon la revendication 6, selon lequel le dispositif (16) comprend une paroi de séparation (36) qui sépare une zone alimentée en vide d'une zone alimentée en pression ambiante, selon lequel l'arbre d'entraînement (24) est guidé de manière étanche par un passage (38) réalisé dans la paroi de séparation (36), et selon lequel les au moins deux bacs de séparation (12, 14) et le disque de séparation (22) sont agencés dans la zone alimentée en vide, tandis que la commande de rotation (26) et le dispositif de levage (28) sont agencés dans la zone alimentée en pression ambiante.

8. Bac de transport (12) pour un système (10) selon la revendication 6 ou 7, qui est mobile dans un premier plan dans un sens de déplacement (20) prévu,
selon lequel le bac de transport (12) comprend au niveau d'extrémités opposées les unes aux autres respectivement une surface avant (12a) qui est prévue afin de mettre en contact une surface avant (14a) opposée d'un bac de transport (14) contigu,
**caractérisé en ce qu'**un évidement partiel (32) est réalisé dans la zone de la surface avant (12a) du bac de transport (12), évidement partiel qui est conçu afin de recevoir une section d'un disque de séparation (22).

9. Procédé de séparation de bacs de transport (12, 14) reliés l'un à l'autre qui sont mobiles dans un premier plan dans un sens de déplacement (20) prévu, **caractérisé par** les étapes suivantes :
déplacement d'un disque de séparation (822) sensiblement ovale, non circulaire au moyen d'un dispositif de levage (28) en direction des bacs de transport (12, 14) à séparer, selon lequel le disque de séparation (22) est orienté parallèlement au premier plan,
introduction du disque de séparation (22) dans un évidement entier (30) correspondant dans les bacs de transport (12, 14) à séparer, et
rotation du disque de séparation (22) au moyen d'une commande de rotation (26) dans le et/ou parallèlement au premier plan afin de séparer l'un de l'autre les bacs de transport (12, 14) à séparer par la rotation du disque de séparation (22).

10. Procédé selon la revendication 9 qui comporte de plus l'étape suivante :
positionnement des bacs de transport (12, 14) à séparer de telle manière que l'évidement entier (30) dans les bacs de transport (12, 14) soit orienté sur une ligne avec le disque de séparation (22), selon lequel la ligne est de préférence orthogonale par rapport au sens de déplacement (20) prévu des bacs de transport (12, 14).
